Europäisches Patentamt

European Patent Office

Office européen des brevets

(11) Publication number: **0 241 477**
**B1**

(12) **EUROPEAN PATENT SPECIFICATION**

(45) Date of publication of patent specification: **28.11.90**

(21) Application number: **86904409.9**

(22) Date of filing: **18.07.86**

(86) International application number:
**PCT/KR86/00014**

(87) International publication number:
**WO 87/01662 26.03.87 Gazette 87/07**

(51) Int. Cl.⁵: **B 60 Q 1/06,** B 60 Q 1/10,
B 60 Q 1/12

(54) **AN AUTOMOBILE HEADLIGHT WHICH THROWS ITS LIGHT IN THE ADJUSTED DIRECTION.**

(30) Priority: **23.09.85 KR 1214785 u**

(43) Date of publication of application:
**21.10.87 Bulletin 87/43**

(45) Publication of the grant of the patent:
**28.11.90 Bulletin 90/48**

(84) Designated Contracting States:
**CH DE FR GB IT LI SE**

(56) References cited:
**EP-A-0 129 519**
**AT-A- 87 984**
**AT-A- 138 788**
**AT-A- 182 628**
**CH-A- 93 110**
**DE-A-2 508 051**
**DE-A-3 230 018**
**DE-B-1 809 202**
**US-A-4 482 939**

(73) Proprietor: **RYOU, Dong II**
**302-18, Mia 3-dong Dobong-ku**
**Seoul 132 (KR)**
(84) **CH DE FR GB IT LI**

(73) Proprietor: **Chung, Ahn Sik**
**366-2, Sinhun-ri, Opo-myun**
**Kwangjoo-Koon, Kyonggi-do (KR)**
(84) **DE FR GB IT SE**

(72) Inventor: **Ryou, Dong II**
**302-18, Mia 3-dong Dobong-ku**
**Seoul 132 (KR)**

(74) Representative: **Voigt, Günter, Dipl.-Ing. et al**
**Patentanwälte Dr. Schulze & Voigt Postfach 21**
**01 04 Nordring 152**
**D-8500 Nürnberg 21 (DE)**

Courier Press, Leamington Spa, England.

## Description

The present invention relates to an automobile headlight according to the first part of claim 1.

According to AT—A—87 984 an automobile headlight is known which can attain the rotation by an horizontal axis as well as by a vertical axis. A double lever is connected to a cable at the inside of the case. The reflecting cap of the headlight is moved up and down within the limited scope by centering at the horizontal axis. There are the defects that the light output from the headlight may not be reduced or may not light the below areas of the forwarding direction.

According to AT—A—138 788 an automobile headlight is known which at the inside of a case has an headlight reflecting mirror adjustable at the line of the axis x and y by a rotation axis 14 connected to a gear 16 operating together with the drivers handle axis 19 of the vehicle and a wire rope locating at the inside of the afore-mentioned rotation axis 14.

Thus, although the afore-mentioned prior arts contain the means to adjust the head lamp of the vehicle to be coincided with the driving direction of the vehicle and to adjust the head lamp to light downwardly, these known means are only applicable to a head lamp equipped on the outside of the vehicles or should change the construction of the frame of the vehicles.

Generally in the case of conventional automobile headlights, there has been a headlight system composed of downward headlight for short distance on the left and an upward headlight for long distance on the right, and a headlight with two types of built-in filaments in an electric bulb for use as one headlight designed to throw a light upward and downward.

Either of these two conventional automobile headlights is fixedly installed in its housing and adjustable only upward and downward, whether it is adjusted by human power or automatically by sensing the illumination of an automobile coming in the opposite direction in an electronic way.

Even when it throws its light on the ground, it is impossible for it to throw its light on the ground on its close front side due to its fixed degrees of irradiation angle.

The present invention aims to provide a headlight which can be used for nearly all automobiles without causing a lot of changes of the vehicles.

This can be reached by an automobile headlight according to claim 1.

Claims 2 and 3 present variations which may be very advantageous.

According to the present invention the cover of the reflex mirror is supported by the pivots (20, 21) to be moved horizontally at the inside of the housing of the existing headlight and, by forming the slot on the upper part of the cover, the cover is supported to the aforementioned cover with the pins (36, 37) without causing a lot of changes of the vehicles.

In the case of the present invention a headlight can quickly throw a light in the direction to which the automobile turns by adjusting its irradiation angle from side to side and can also throw a light on the ground just thereunder when the automobile arrives at the top of a slope by setting its irradiation angle extremely downward.

Figure 1 is a front view showing that the irradiation angle of an automobile headlight is adjusted according to the embodiment of the present invention.

Figure 2 is a vertical sectional view of Figure 1.

Figure 3 is a ground plan view of Figure 1.

Figure 4 is a vertical sectional view showing that the headlight embodied by the present invention is pivoted within its housing.

Figure 5 is a vertical sectional view showing that the headlight uses the inner surface of cover as a reflex mirror in another embodiment transformed by the present invention.

When an explanation is given to the newest embodiment of the present invention according to the drawings attached hereto, it comes as follows:

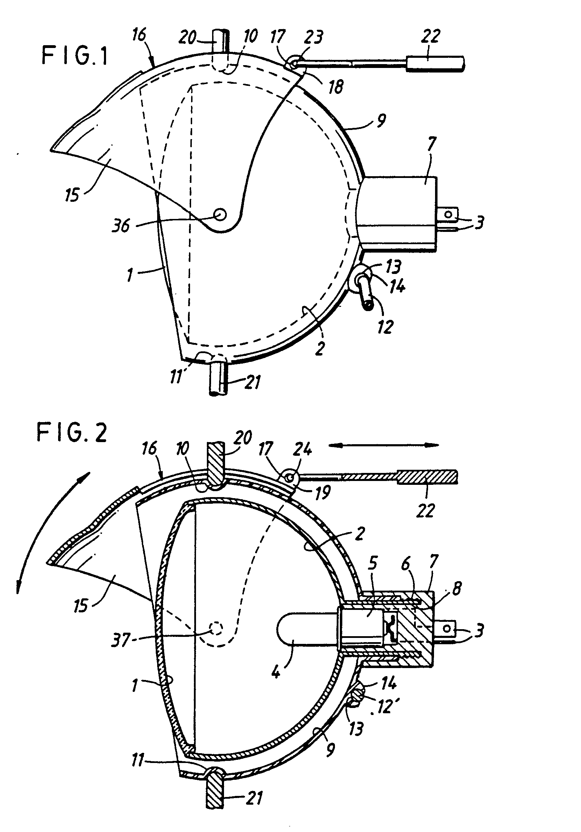

Figure 1 and Figure 2 are a front view and a vertical sectional view of an automobile headlight the irradiation direction of which is adjustable according to an embodiment of the present invention.

A terminal (3) is exposed at the rear end of a reflex mirror (2) with a lens (1) inserted into the front side and the base (5) of an electric bulb (4) is united therewith and a bolt part (8) which will be combined with a socket (7) with a nut part (6) formed is formed.

A cover (9), which is open at its front side and at its rear end, forms confronting pivot suspensions (10) (11) in the upper and lower parts and is interlocked with the steering device of an auto-mobile on the outer wall in the rear lower part and a fixing means (14) provided with a globular groove (13) into which an end-globular (12') cover working bar (12) will be inserted from the direction of axis is formed.

The said reflex mirror (2) and the cover (9) will be fixed under the condition that they are inserted into the inside of a socket (7), as shown in Figure 2.

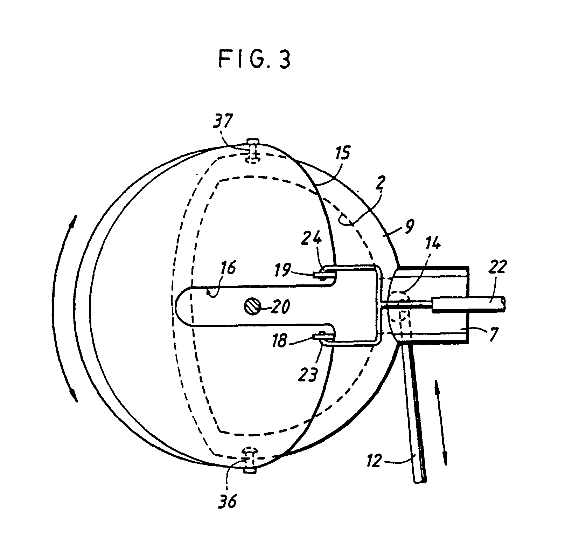

Figure 3 is a ground plan according to an embodiment of the present invention, which shows that it is axially fixed by pins (36) (37) so as to enable a cap (15) to make a turn upward and downward in the cover (9).

The cap (15) forms in the upper center a slot (16) with its rear side open and brackets (18) (19) provided with a hole (17) at both sides of an open slot (16). In the slot (16), a pivot (20) located in the upper part out of pivots (20) (21) which are pivoted with pivot suspensions (10) (11) formed in the upper and lower parts of a said cover (9) will be placed and, in the hole (17) of said brackets (18) (19), both ends (23) (24) of a cap working bar (22) which will be connected to such a drive as a drive cable or a link will be inserted.

And the cap (15) is axially fixed in the center from both sides of a cover (9) by pins (36) (37) so as to make a turn.

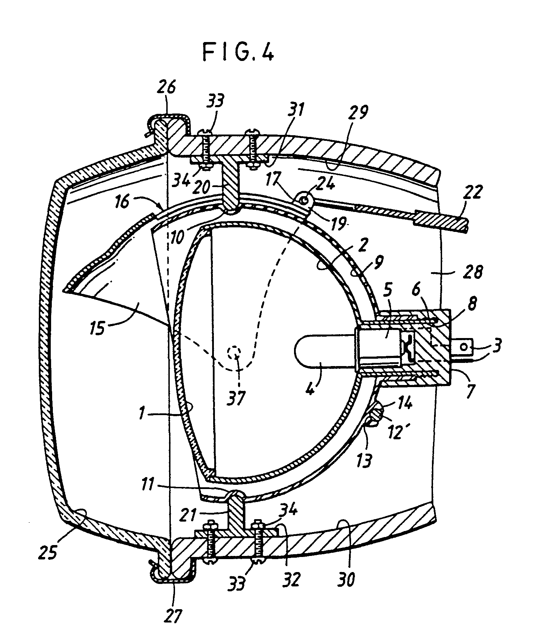

Figure 4 is a vertical sectional view showing that a headlight embodied by the present invention is pivoted within the housing. It shows structure in which fixing means (31) (32) with pivots (20) (21) fixed projectingly on the inner walls (29) (30) in the upper and lower parts of a housing (28) to the front side of which a lens (25) will be fixed by dint of detachable means (26) (27) are combined by a bolt (33) and a nut (34) and a cover (9) with pivot suspensions (10) (11) formed respectively in the upper and lower parts thereof is pivoted so as to move from side to side within the housing (28) by means of the cover working bar (12).

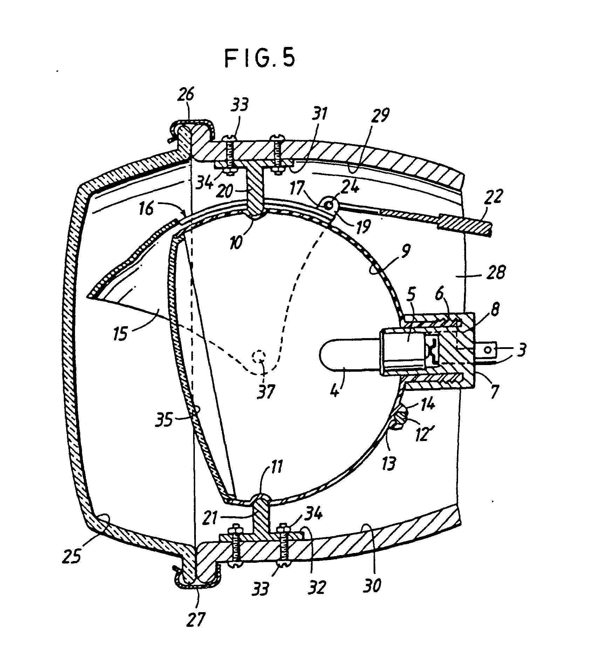

Figure 5 is another embodiment transformed by the present invention. It is a vertical sectional view showing that a headlight which uses the inner surface of a cover as a reflex mirror is pivoted within the housing. It illustrates that a headlight provided with structure, where a reflex layer is formed on the inner surface of the cover (9) and a separate reflex mirror left out by fixing a lense (35) to the open front side of the cover (9) is furnished within the housing (28).

As the present invention is constituted with a cap (15) fixed axially in the center from both sides (left and right) of a cover (9) by pins (36) (37) so as to make a turn upward and downward as shown in Figure 2 and Figure 3, the driver can freely adjust the irradiation direction of headlight upward and downward by the upward and downward operation of a cap (15) effected by means of a cap working bar (22) connected to its drive like a drive cable or a link interlocked with an unillustrated steering device installed underneath his seat.

In addition, as it possesses not only a function designed to adjust the irradiation in the upward and downward directions but also a cover (9) pivoted within the housing (28) by pivot suspensions (10) (11), and pivots (20) (21) of fixing means (31) (32), it is linked with a steering device operated by a steering wheel and it can adjust the irradiation of headlight in the left or right direction to which the automobile turns by means of a cover working bar (12) inserted axially into the fixing means (14) formed on the outer wall in the rear lower part of the cover (9).

The automobile headlight designed to adjust its irradiation direction by the present invention is able to watch the front in the direction to which the driver wants to make a turn by adjusting its irradiation direction together with a steering device while running. In particular, it has the effect of safely driving the automobile at night by providing the driver with a function able to previously watch his front directly thereunder through downward adjustment of its irradiation direction when he arrives at the top of a slope on which he is running.

## Claims

1. An automobile headlight, comprising a reflex mirror (2) with a lens (1) attached to the front side and an electric bulb (4) inserted into the rear side, and a cover (9) provided with a fixing means (14), characterized in that pivot suspensions (10, 11) are formed in the upper and lower parts of the cover and a cover working bar (12) is attached to the outer wall of the cover, the rear lower part of which is fixed by a socket (7), in that an adjustable cap (15) is provided with an upper slot (16), brackets (18, 19) and an axially cap working bar (22) attached to the brackets so as to pivot the cap upward and downward with respect to the cover (9) about horizontal pins (36, 37) while the direction of irradiation can be adjusted by pivoting the cover (9) within the housing (28) about pivots (20, 21) mounted on fixing means (31, 32).

2. An automobile headlight according to claim 1, characterized in that the cover (9) is provided with a reflex layer formed on the inner surface and with a lens (35) attached to the open front side.

3. An automobile headlight according to claim 1 or 2, characterized in that the direction of irradiation can be adjusted by rotation of the cover (9) with respect to said fixing means (31, 32).

## Patentansprüche

1. Fahrzeug-Scheinwerfer, bestehend aus einem Reflex-Spiegel (2) und einer Linse (1) an seiner Vorderseite sowie einer Glühbirne (4) im rückwärtigen Bereich und einem Gehäuse (9), das mit einer Befestigungseinrichtung (14) versehen ist, dadurch gekennzeichnet, daß im oberen und unteren Teil des Gehäuses Schwenkeinrichtungen (10, 11) vorhanden sind und ein Betätigungsstab (12) für das Gehäuse an dessen Außenwand angebracht ist, wobei dessen hinterer unterer Teil durch eine Halterung (7) fixiert ist, an der eine einstellbare Kappe (15) mit einem oberen Schlitz (16) und Aufnahmen (18, 19) sowie einer axialen Betätigungsstange (22) angebracht ist, wobei diese mit den Aufnahmen derart verbunden ist, daß die Kappe in Bezug auf das Gehäuse (9) um horizontale Stifte (36, 37) aufwärts und abwärts verschwenkbar ist, während die Strahlrichtung durch Verschwenken des Gehäuses (9) innerhalb eines Hohlraums (28) um Schwenklager (20, 21) schwenkbar ist, die ihrerseits an Halterungen (31, 32) befestigt sind.

2. Fahrzeug-Scheinwerfer gemäß Anspruch 1, dadurch gekennzeichnet, daß das Gehäuse (9) auf seiner inneren Oberfläche mit einer Reflexionsschicht versehen ist und an seiner offenen Frontseite eine Linse (35) aufweist.

3. Fahrzeug-Scheinwerfer gemäß Anspruch 1 oder 2, dadurch gekennzeichnet, daß die Strahlrichtung durch Drehung des Gehäuses (9) in Bezug auf die Halterungen (31, 32) eingestellt werden kann.

## Revendications

1. Phare de véhicule automobile comprenant un miroir réfléchissant (2) avec une lentille (1) fixée sur son côté avec et un ampoule électrique (4) placée dans son côté arrière, et, un boîtier (9) munie de moyens de fixation (14), caractérisé en ce que des bossages de réception de pivots (10), (11) sont formées dans les parties supérieure et inférieure du boîtier, une tige (12) actionnant le boîtier est fixée sur la paroi extérieure du boîtier dont la partie arrière inférieure est attachée par une douille (7), une calotte orientable (15) est pourvue d'une rainure supérieure (16), de taquets (18), (19) et d'une tige (22) qui actionne axialement la calotte (15) et est assemblée avec lesdits taquets de façon à faire pivoter la calotte vers le haut et vers le bas par rapport au boîtier (9) autor d'axes horizontaux (36), (37), tandis que la direction du rayonnement peut être réglée par pivotement du boîtier (9) vers l'intérieur de son logement (28) autor de pivots (20), (21) maintenus par des moyens de fixation (31), (32).

2. Phare de véhicule automobile selon la revendication 1 caractérisé en ce que le boîtier (9) est pourvu sur sa surface intérieure d'une couche réfléchissante et comporte une lentille (35) fixée sur la face frontale ouverte.

3. Phare de véhicule automobile selon les revendications 1 ou 2 caractérisé en ce que la direction du rayonnement peut être réglée par rotation du boîtier (9) par rapport aux moyens de fixation (31), (32).

FIG.1

16   20   10   17   23   22
18
9
7
3
15
36
13
14
1
12
2
11   21

FIG.2

16   10   20   17   24   22
19
15
2
5   6   7
8
37
3
4
1
14
12'
13
9
11   21

FIG. 3

## F I G. 4

# FIG. 5